# EUROPÄISCHE PATENTANMELDUNG

(11) **EP 1 579 790 A1**
(43) Veröffentlichungstag der Anmeldung: **28.09.2005**
(21) Anmeldenummer: 05006126.6
(22) Anmeldetag: 21.03.2005
(51) Int. Cl.: A47G 19/14

(54) **Teeset**

(30) Priorität: 26.03.2004 DE 202004004919 U
(71) Anmelder: Beem, 61191 Rosbach v.d.H. (DE)
(72) Erfinder: Mehshat, Bijan, 61348 Bad Homburg v.d.H. (DE)
(74) Vertreter: Quermann, Helmut

(57) **Zusammenfassung**

Die Erfindung betrifft ein Teeset (1), bestehend aus Teekanne (2) und Wasserkessel (3), wobei die Teekanne auf dem Wasserkessel anordbar ist, sowie die Teekanne und der Wasserkessel jeweils einen Griff (7, 8) aufweisen.

Erfindungsgemäß ist vorgesehen, dass ein Deckel (10) für den Wasserkessel geteilt ist, derart, dass der Deckel ein zentrales Deckelteil (11) und ein äußeres ringförmiges Deckelteil (13) bildet, wobei das zentrale Deckelteil (11) vom äußeren Deckelteil (13) entfernbar und auf dieses wieder aufsetzbar ist.

Es ist ferner vorgesehen, dass die Griffe (7, 8) von Teekanne und Wasserkessel in überlappender Stellung anordbar sind, derart, dass das Teeset durch Ergreifen der Griffe als Einheit mittels einer Hand transportiert und bewegt werden kann.

## Beschreibung

Die Erfindung betrifft ein Teeset, bestehend aus Teekanne und Wasserkessel, wobei die Teekanne auf dem Wasserkessel anordbar ist, sowie die Teekanne und der Wasserkessel jeweils einen Griff aufweisen.

Teesets sind im alltäglichen Gebrauch hinlänglich bekannt und bestehen üblicherweise aus vier bis sechs Teegläsern mit Untersetzern, einer Teekanne mit Stövchen, einem Wasserkessel und einer Servierplatte.

Hierbei wird dann im privaten Haushalt der Gast direkt am Tisch, im Esszimmer oder Wohnzimmer verköstigt. Der Tee/Teebeutel befindet sich in der Teekanne, wird am Tisch mit heißem Wasser aus dem Wasserkessel überbrüht und in der Teekanne ziehen gelassen. Danach kann die Teekanne zum Warmhalten auf einem Stövchen platziert werden.

Gelegentlich gibt es auch Ausführungen, bei welchen die Teekanne auf dem Wasserkessel abgelegt werden kann und somit heiß gehalten wird. Damit entfällt das Stövchen. Diese Variante ist als Huckepack-Einheit (Teekanne, Wasserkessel) im Markt bekannt.

Ähnliche Varianten zum Servieren des Tees sind auch bekannt, zum Beispiel eine mittig geteilte Teekanne in Globusform der Porzellanmanufaktur Arzberg, deren Unterteil die Teekanne darstellt und deren Oberteil, somit Deckel, gleichzeitig die Tasse ist.

Aufgabe der Erfindung ist es, ein Teeset der eingangs genannten Art so weiter zu bilden, dass dieses sich durch eine hohe Bedienfreundlichkeit, insbesondere einfache Handhabung zum Servieren am Tisch auszeichnet. Aufgabe der Erfindung ist es ferner, ein solches Teeset zu schaffen, in dem der Tee optimal warm gehalten werden kann, bei Minimierung der Kondensation des Wasserdampfs am Teekannenboden.

Gelöst wird die Aufgabe bei einem Teeset der genannten Art dadurch, dass die Griffe des Wasserkessels und der Teekanne in überlappender Stellung anordbar sind, derart, dass das Teeset durch Ergreifen der Griffe als Einheit mittels einer Hand transportiert und bewegt werden kann.

Gelöst wird die Aufgabe ferner durch ein Teeset der eingangs genannten Art, das dadurch gekennzeichnet ist, dass ein Deckel für den Wasserkessel geteilt ist, derart, dass der Deckel ein zentrales Deckelteil und ein äußeres, ringförmiges Deckelteil bildet, wobei das zentrale Deckelteil vom äußeren Deckelteil entfernbar und auf dieses wieder aufsetzbar ist.

Es wird als besonders vorteilhaft angesehen, wenn das Teeset, bestimmt durch die Form der Teekanne und des Wasserkessels eine Form aus einem Guss bildet, vorzugsweise aus der Eiform oder einer geometrischen Form abgeleitet sind. Hierbei sollten die Beschläge der Geschirre an die Form der Grundkorpi angelehnt sein.

Weist das Teeset Eiform auf, wird zweckmäßig durch diese Form die Aufteilung des Volumens von Teekanne und Wasserkessel bedarfsgerecht bestimmt. Vorzugsweise sind die Nutzvolumina der Teekanne und des Wasserkessels im Verhältnis 1:1,5 bzw. 1:2. Die Ei-Form eignet sich ideal für diese Verhältnisse, da die Ei-Form in der unteren Hälfte wesentlich breiter ist und somit der Wasserkessel ein relativ großes Nutzvolumen, hingegen die Teekanne ein deutlich geringes Nutzvolumen aufweist.

Insbesondere die Ei-Form ermöglicht es, die Griffe von Wasserkessel und Teekanne im vorbeschriebenen Sinne anzupassen bzw. auszugestalten, so dass diese in überlappende Stellung bringbar sind und überdies so nah wie möglich an der Schwerachse der Geschirre (Teekanne und Wasserkessel) angreifen. Hierdurch erfolgt die Handhabung der gefüllten Behältnisse, nämlich Heben und Neigen der Teekanne und des Wasserkessels mit minimaler Kraftanstrengung. Überdies können beide Geschirre mit einer Hand transportiert werden.

Nachteilig ist, dass sich die Ei-Form als wenig praktisch zum Warmhalten der Teekanne erweist, da die Öffnung des Wasserkesselrandes formbedingt relativ groß ist und somit der Teekannenboden eine große Angriffsfläche für kondensierenden Dampf bildet. Daraus resultiert eine großflächige Kondensation/Ansammlung von Wassertropfen am Teekannenboden, welche beim Neigen der Teekanne auf den Tisch/Unterlage tröpfeln.

In Weiterbildung der Erfindung wird daher die Dampfentwicklung des Wasserkessels zum Teekannenboden hin durch den Deckel für den Wasserkessel, der einen Zwischendeckel darstellt, in den eine Dampfführung integriert ist, kanalisiert. Hierdurch kann die Dampfbeaufschlagung des Teekannenbodens auf beispielsweise 3/10 der ursprünglichen Menge reduziert werden. 7/10 des Dampfes entweichen nun ohne Kontakt mit der Teekanne durch den Ausgießer des Wasserkessels nach außen.

Der Deckel/Zwischendeckel des Wasserkessels ist im Sinne der vorbeschriebenen Erfindung zweiteilig ausgeführt, um in dessen Zentrum mittels beispielsweise eines Bajonett- oder Rastverschlusses ein Bedienelement anschließen zu können. Dies ermöglicht es, den Wasserkesseldeckel jederzeit vom Wasserkessel abheben zu können. Zum Huckepack-Betrieb der Teekanne samt Wasserkessel wird das verrastbare Bedienelement, somit das zentrale Deckelteil des Deckels, zuvor entfernt und die Teekanne nun an dessen Stelle auf den Zwischendeckel aufgesetzt. Von besonderer Bedeutung ist, dass der Deckel der Teekanne auch als Bedienelement des Wasserdeckelkessels zu konstruieren bzw. zu verwenden ist. Der Deckel der Teekanne kann somit das zentrale Deckelteil des Wasserkessels sein, wobei der Deckel der Teekanne mit dem genannten Bajonett- oder Rastverschluss versehen ist. Der Deckel ist einerseits mit Teekanne, andererseits mit dem äußeren ringförmigen Deckelteil des Wasserkessels mittels Bajonett oder Rastieren verbindbar.

Weitere Merkmale der Erfindung sind in der nachfolgenden Beschreibung der Zeichnung, der Zeichnung selbst sowie den Unteransprüchen offenbart, wobei bemerkt wird, dass alle Merkmale und Einzelmerkmale erfindungswesentlich sind.

In der Zeichnung ist ein Ausführungsbeispiel dargestellt, ohne hierauf beschränkt zu sein.

Es zeigt:
- Fig. 1: das erfindungsgemäße Teeset in einem Längsmittelschnitt bei auf dem Wasserkessel angeordneter Teekanne;
- Fig. 2: das in Figur 1 gezeigte, geschnittene Teeset in einer Explosionsdarstellung veranschaulicht;
- Fig. 3: den in den Figuren 1 und 2 gezeigten, geschnittenen Wasserkessel mit Deckel.

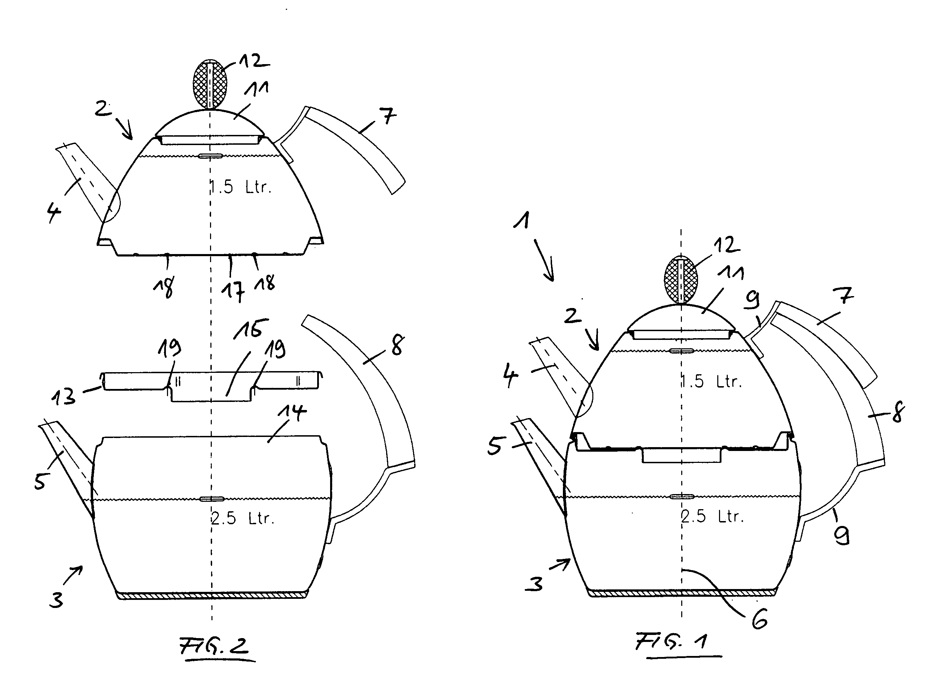

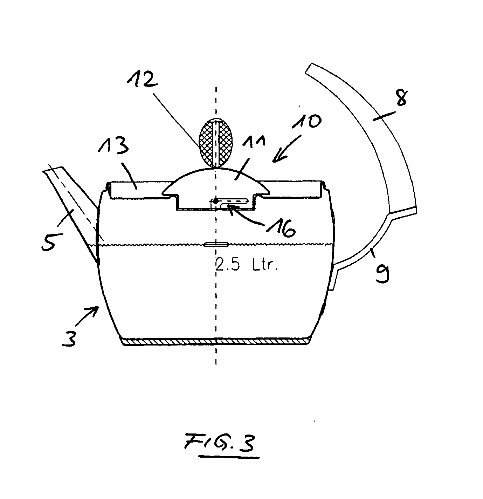

Das Teeset 1 besteht aus der Teekanne 2 mit einem Fassungsvermögen von etwa 1,5 Litern und dem Wasserkessel 3 mit einem Fassungsvermögen von ungefähr 2,5 Litern. Die Teekanne 2 ist auf dem Wasserkessel 3 anordbar, wie dies der Figur 1 zu entnehmen ist. Hierbei bildet das Teeset 1 eine Ei-Form.

Teekanne 2 und Wasserkessel 3 sind jeweils mit einem Ausgießer 4 bzw. 5 versehen. Auf der dem Ausgießer 4 bzw. 5 abgewandten Seite, somit auf die Rotationsachse 6 des Eis bezogen, ist die Teekanne 2 mit einem Griff 7 und der Wasserkessel 3 mit einem Griff 8 versehen. Mittels Beschlägen 9 sind die beiden Griffe 7, 8 mit der Außenfläche der Behälterwandung von Teekanne 2 und Wasserkessel 3 verbunden. Bei gebildetem Teeset sind die Griffe 7 und 8 in überlappender Stellung anordbar, derart, dass das Teeset 1 durch Ergreifen der Griffe 7, 8 als Einheit mittels einer Hand transportiert und bewegt werden kann. Diese Anordnung von Teekanne 2 und Wasserkessel 3 ist in Figur 1 veranschaulicht.

Sowohl der Wasserkessel 3 als auch die Teekanne 2 sind mittels eines Deckels verschließbar. Der Deckel 10 des Wasserkessels 3 ist geteilt, konkret zweiteilig ausgebildet. Der Deckel 10 weist ein zentrales Deckelteil 11 mit zentralem, oberen Knopf 12 zum Erfassen des Deckelteils 11, ferner ein äußeres, ringförmiges Deckelteil 13 auf. Das äußere Deckelteil 13 ist in den Wasserkessel 3 im Bereich dessen oberer Öffnung 14 einsetzbar. Das zentrale Deckelteil 11 ist in die zentrale Öffnung 15 des äußeren Deckelteils 13 einsteckbar. Mittels eines Bajonettverschlusses 16 oder Rastverschlusses, der zwischen den Deckelteilen 11 und 13 wirksam ist, lassen sich diese miteinander rastieren. In rastierter Stellung lässt sich der Deckel 10 insgesamt durch Ergreifen des Knopfes 12 anheben und damit vom Wasserkessel 3 abheben. Zum Huckepack-Betrieb der Teekanne 2 samt Wasserkessel 3 wird das zentrale Deckelteil 11 von dem auf dem Wasserkessel 3 aufsitzenden äußeren Deckelteil 13 getrennt und die Teekanne nun auf das äußere Deckelteil 13 aufgesetzt. Das zentrale Deckelteil 11 fungiert dann als Deckel der Teekanne 2, die mit entsprechenden Bajonett- oder Rastbereichen zum Zusammenwirken mit den entsprechenden Bereichen des zentralen Deckelteils 11 versehen ist.

Die Bodenkontur der Teekanne 2 ist der Kontur des äußeren Deckelteils 13 angepasst, so dass sich das Teeset 1 durch eine gefällige Ei-Form darstellt. Die Übergänge von Teekanne 2 zu Wasserkessel 3 sind homogen, so dass sich das Teeset wie aus einem Guss gebildet darstellt. Die Beschläge der Geschirre sind der Form der Grundkorpi angelehnt. Aus der Darstellung der Figuren ergibt sich ohne weiteres, dass die Beschläge so ausgebildet sind, dass das Heben und Neigen des Teesets im Angriffspunkt des Schwerpunktes erfolgt und somit fast ohne Hebelwirkung auf das reine Gewicht der Einheit reduziert ist.

Die Beschläge sind insbesondere aus Edelstahl gefertigt und griffseitig mit Kunststoff-Wärme-isolierenden Griffschalen versehen.

Von Bedeutung ist bei dem Teeset 1, dass der Deckel des Wasserkessels 3, konkret das äußere Deckelteil 13, im Huckepack-Betrieb mit der Teekanne 2 als Dampfführung dient und die Dampfkondensation am Teekannenboden 17 minimiert. So wird vorteilhaft die Teekanne 2 im Zentrum des äußeren Deckelteils 13 durch die darin im Verhältnis von etwa 3/10 der Deckelfläche gebildete Öffnung 15 mit minimalem Dampf beaufschlagt. Der Teekannenboden 17 weist eine eingeprägte Rille 18 auf, die bei gebildetem Teeset mit einer Sicke 19 des äußeren Deckelteils 13 zusammen wirkt und damit die Teekanne 2 bezüglich des Wasserkessels 3 zentriert und zudem gegen Dampf abschottet. In diesem Zusammenhang wird es als vorteilhaft angesehen, wenn der maximale Wasserfüllstand des Wasserkessels 3 gerade bis zum Anschluss des Ausgießers 5 reicht und somit ein Großteil des Dampfes durch die offene Ausgießtüllle entweicht.

Der Griff 7 der Teekanne 2 ist, ausgehend vom Beschlag 9, nach unten gerichtet, während der Griff 8 des Wasserkessels 3, ausgehend vom Beschlag 9, nach oben gerichtet ist, womit sich die beiden Griffe 7 und 8 von Teekanne 2 und Wasserkessel 3 bei gebildetem Teeset 1 und entsprechender Positionierung von Wasserkessel 3 und Teekanne 2 zueinander überlappen.

## Patentansprüche

1. Teeset (1), bestehend aus Teekanne (2) und Wasserkessel (3), wobei die Teekanne (2) auf dem Wasserkessel (3) anordbar ist, sowie die Teekanne (2) und der Wasserkessel (3) jeweils einen Griff (7, 8) aufweisen, **dadurch gekennzeichnet, dass** ein Deckel (10) für den Wasserkessel (3) geteilt ist, derart, dass der Deckel (10) ein zentrales Deckelteil (11) und ein äußeres, ringförmiges Deckelteil (13) bildet, wobei das zentrale Deckelteil (11) vom äußeren Deckelteil (13) entfernbar und auf dieses wieder aufsetzbar ist.

2. Teeset (1), bestehend aus Teekanne (2) und Wasserkessel (3), wobei die Teekanne (2) auf dem Wasserkessel (3) anordbar ist, sowie die Teekanne (2) und der Wasserkessel (3) jeweils einen Griff (7, 8) aufweisen, **dadurch gekennzeichnet, dass** die Griffe (7, 8) von Teekanne (2) und Wasserkessel (3) in überlappender Stellung anordbar sind, derart, dass das Teeset (1) durch Ergreifen der Griffe (7, 8) als Einheit mittels einer Hand transportiert und bewegt werden kann.

3. Teeset nach Anspruch 1, **dadurch gekennzeichnet, dass** die Griffe (7, 8) von Teekanne (2) und Wasserkessel (3) in überlappender Stellung anordbar sind, derart, dass das Teeset (1) durch Ergreifen der Griffe (7, 8) als Einheit mittels einer Hand transportiert und bewegt werden kann.

4. Teeset nach einem der Ansprüche 1 bis 3, **dadurch gekennzeichnet, dass** das zentrale Deckelteil (11) rastierend mit dem äußeren Deckelteil (13) verbindbar ist.

5. Teeset nach einem der Ansprüche 1 bis 4, **dadurch gekennzeichnet, dass** der Deckel (13) des Wasserkessels (3) im Huckepack-Betrieb mit der Teekanne (2) als Dampfführung dient und die Dampfkondensation am Teekannenboden (11) minimiert.

6. Teeset nach einem der Ansprüche 1 bis 5, **dadurch gekennzeichnet, dass** Teekanne (2), Wasserkessel (3) und Deckel (11) der Teekanne (2) eine Form wie aus einem Guss bilden, vorzugsweise aus der Ei-Form oder einer geometrischen Form abgeleitet sind.

7. Teeset nach Anspruch 6, **dadurch gekennzeichnet, dass** die Beschläge (7, 8, 9) der Geschirre (2, 3) der Form der Grundkorpi angelehnt sind.

8. Teeset nach einem der Ansprüche 1 bis 7, **dadurch gekennzeichnet, dass** die Beschläge (7, 8, 9) derart ausgebildet sind, dass das Heben und Neigen der Geschirre (2, 3) im Angriffspunkt des Schwerpunktes erfolgt und somit fast ohne Hebelwirkung auf das reine Gewicht der Einheit reduziert ist.

9. Teeset nach einem der Ansprüche 1 bis 8, **dadurch gekennzeichnet, dass** die Beschläge (9) aus Edelstahl gefertigt sind und griffseitig (Griffe 7, 8) mit Kunststoff-Wärme-isolierenden Griffschalen versehen sind.

10. Teeset nach einem der Ansprüche 1 bis 9, **dadurch gekennzeichnet, dass** die Teekanne (2) durch eine zentrale Öffnung (15) des äußeren Deckelteils (13) mit Dampf beaufschlagt wird, wobei die Fläche der Öffnung (15) insbesondere etwa 3/10 der Fläche des Deckels (13) beträgt.

11. Teeset nach einem der Ansprüche 1 bis 10, **dadurch gekennzeichnet, dass** sich die Teekanne (2) durch eine im Boden (17) der Teekanne (2) eingeprägte Rinne (18) im Zentrum in der Öffnung (15) des Wasserkesseldeckels (13) auf einer Sicke (19) zentriert und gegen Dampf abschottet und sich am Rand des Wasserkesseldeckels (13) abstützt.

12. Teeset nach einem der Ansprüche 1 bis 11, **dadurch gekennzeichnet, dass** der Deckel (11) der Teekanne (2) gleichzeitig als Bedienelement des Wasserkesseldeckels (11, 13) dient.

13. Teeset nach einem der Ansprüche 1 bis 12, **dadurch gekennzeichnet, dass** der Deckel (11) der Teekanne (2) das zentrale Deckelteil (11) des Deckels (10) des Wasserkessels (3) bildet.

14. Teeset nach einem der Ansprüche 1 bis 13, **dadurch gekennzeichnet, dass** das Volumenverhältnis von Teekanne (2) und Wasserkessel (3) 1:1,5 bis 1:2 ist.

15. Teeset nach einem der Ansprüche 1 bis 14, **dadurch gekennzeichnet, dass** der maximale Wassserfüllstand des Wasserkessels (3) gerade bis zum Anschluss des Ausgießers (5) des Wasserkessels (3) reicht und somit ein Großteil des Dampfes durch die offene Ausgießtülle entweichen kann.
